# EUROPÄISCHE PATENTSCHRIFT

(11) **EP 0 571 587 B1**
(45) Veröffentlichungstag und Bekanntmachung des Hinweises auf die Patenterteilung: **17.04.1996**
(21) Anmeldenummer: 92924615.5
(22) Anmeldetag: 27.11.1992
(51) Int. Cl.: B09B 3/00

(54) **Verfahren und Vorrichtung zur Entsorgung von als Isoliermaterial bei Geräten verwendeten, Treibmittel enthaltenden Schaumstoffen wie Polyurethan**
Process and device for disposing of foamed material like polyurethane used as insulators in apparatus and including blowing agent
Procédé et dispositif pour l'élemination de produits moussés tels que polyuréthane utilisés comme matériau isolant dans des appareils et contenant des agents d'éxpansion

(30) Priorität: 11.12.1991 DE 4140848
(43) Veröffentlichungstag der Anmeldung: 01.12.1993
(73) Patentinhaber: LICHTBLAU, Josef, D-8152 Feldkirchen-Westerham (DE); WALLNER, Heinrich, D-8224 Chieming (DE)
(72) Erfinder: LICHTBLAU, Josef, D-8152 Feldkirchen-Westerham (DE); WALLNER, Heinrich, D-8224 Chieming (DE)
(74) Vertreter: Flach, Dieter Rolf Paul, Dipl.-Phys.
(86) Internationale Anmeldenummer: EP9202752
(87) Internationale Veröffentlichungsnummer: WO9311885

(56) Entgegenhaltungen:
- EP-A- 0 336 254
- EP-A- 0 442 113
- WO-A-91/02638
- DE-A- 3 911 420
- DE-A- 3 929 666
- DE-A- 4 022 401
- DE-U- 8 914 957

## Beschreibung

Die Erfindung betrifft ein Verfahren und eine Vorrichtung zur Entsorgung von als Isoliermaterial bei Geräten verwendeten, Treibmittel enthaltenden Schaumstoffen wie Polyurethan nach dem Oberbegriff des Anspruches 1 bzw. 14.

In der Bundesrepublik Deutschland werden jährlich bis zu weit über 2 Millionen Kühlgeräte ausgemustert. Bekanntermaßen enthalten diese Kühlgeräte als flüssiges umströmendes Kühlmittel Fluorkohlenwasserstoffe, nämlich FCKW, wobei derartige Treibmittel, insbesondere FCKW Frigen R11 vor allem auch zum Ausschäumen der Zellen des Polyurethan-Schaumes (PUR-Schaumes) verwandt werden und deshalb in den zur Isolierung dienenden Schaummaterialien enthalten sind.

Darüber hinaus sind aber auch viele andere Geräte und Vorrichtungen bekannt, die ebenfalls die Ozonschicht schädigende und angreifende Treibmittel enthalten.

Von daher stellt die Entsorgung derartiger Geräte ein Problem dar, das zunehmend größere Beachtung findet.

Das im Kühlmittelkreislauf verwandte Kühlmittel kann dabei direkt aus dem Kühlmittelkreislauf entnommen werden. Als Problempunkt verbleibt dann das in dem Kunststoff-Schaummaterial weiterhin befindliche Treibmittel.

Gemäß der DE-C-40 04 336 wird deshalb vorgeschlagen, entsprechende Kühlgeräte in einer geschlossenen Kammer mechanisch zu zerkleinern und nachfolgend die dabei entstehenden Bruchstücke mit Hilfe von körnigen Strahlmitteln abzustrahlen. Dadurch sollen die geschlossenen Zellen des Polyurethanschaumes zerschnitten und die Zellwände zertrümmert werden. Die abgestrahlten Bruchstücke werden von den Polyurethanschaum-Flocken bzw. -Mehl getrennt und zum Abstrahlen rückgeführt. Die Polyurethanschaum-Flocken sowie das entsprechende -Mehl werden gesammelt und in Form von verdichteten Briketts abgegeben. An mehreren Stellen wird die gesamte in der Kammer befindliche Abluft abgesaugt und unter Verwendung von Aktivkohlefilter absorbiert.

Bei einem gemäß der DE-A-39 29 666 bekannten Verfahren werden die Fluorkohlenwasserstoffe enthaltenden Schaumstoffe in eine geschlossene Kammer gefüllt. Die Kammer wird anschließend luftleer gepumpt, wobei dann ein Preßstempel unter Verdichtung des Polyurethanschaumes eingefahren wird, wodurch die Schaumzellen zerstört werden. Das austretende Treibmittel wird abgesaugt und gesammelt.

Bei einem gemäß der DE-A-38 11 486 bekannten Verfahren ist vorgesehen, daß die Treib- und/oder Kältemittel insbesondere in Form von FCKW enthaltenden Schaumstoffteilen in eine Zerkleinerungskammer gegeben werden, die von einem Fluid in Form von Luft durchströmt wird. Das austretende gasförmige Treibmittel wird in diesem Fluidstrom mitgeführt. Der Fluidstrom wird nach Austritt aus der Zerkleinerungskammer mindestens einer Kühlstufe zugeführt, um in dieser Kühlstufe das Treib- und/oder Kältemittel auszukondensieren.

Auch bei dem aus der DE-U-89 14 957 vorveröffentlichten Verfahren wird ebenfalls nach Durchführung eines hinlänglich bekannten Shredderverfahrens wie auch bei dem zuvor genannten Stand der Technik anschließend über mehrere Stellen das bei der Entsorgung entstehende Fluorkohlenwasserstoff-Luft-Staub-Gemisch abgepumpt, um nach einer Reinigung das Treibmittel in einem Kondensationssammler zu verflüssigen.

Das Shreddern selbst weist aber Nachteile auf. Im geshredderten Materialgemisch befindet sich nach dem Entgasen in der Regel immer noch eine erhebliche Menge von PUR-Schaum und damit auch FCKW Frigen R11. Dieses im Restschaum gebundene Treibmittel kann nach dem Herausführen des Schaummaterials aus der Behandlungskammer nach wie vor in die Umwelt gelangen. Schließlich ist das Shreddern auch für die Werkstoffrückgewinnung nur bedingt einsetzbar. Denn das durch das Shreddern entstandene Materialgemisch ist nur sehr aufwendig in einzelne sortenreine Fraktionen zu trennen. Bei Kunststoffen ist dies oft sogar überhaupt nicht mehr möglich. Zudem ist das Shreddern auch sehr energieaufwendig.

Schließlich könnte auch daran gedacht werden, sortenreinen PUR-Schaum in entsprechenden Anlagen zu entgasen. Allerdings kommt sortenreiner PUR-Schaum in einer Vielzahl von zu entsorgenden Geräten, insbesondere Elektro-Haushaltsgeräten, wie Kühlschränken, nur sehr selten vor. Es handelt sich fast ausschließlich um Verbundstoffe. Dieses Verfahren ist deshalb für die Entsorgung von Elektro-Haushaltsgeräten nicht geeignet. Beim Trennen dieser Verbundstoffe würde ein Teil dieses Treibmittels frei. Auch dies müßte dabei natürlich in einer geschlossenen Anlage geschehen.

Als weiterhin nachteilig schlägt sich bei all den vorgeschlagenen Verfahren der durchaus beachtliche Energiebedarf nieder.

Aufgabe der vorliegenden Erfindung ist es, ausgehend von dem eingangs genannten Stand der Technik ein Verfahren sowie eine Vorrichtung zur Entsorgung von Treibmittel enthaltenden Schaumstoffen, insbesondere von als Isoliermaterial bei Kühlgeräten verwendeten Schaumstoffen wie Polyurethan zu schaffen, um gegegenüber dem Stand der Technik eine noch effizientere energiesparendere Entsorgung der Treibmittel bzw. des die Treibmittel enthaltenden Kunststoff-Schaumstoffes zu ermöglichen.

Die Aufgabe wird bezüglich des Verfahrens entsprechend den im Anspruch 1 und bezüglich der Vorrichtung entsprechend den im Anspruch 14 angegebenen Merkmalen gelöst. Vorteilhafte Ausgestaltungen der Erfindung sind in den Unteransprüchen angegeben.

Die vorliegende Erfindung schlägt gegenüber dem gesamten Stand der Technik einen völlig neuen Weg ein. Beim erfindungsgemäßen Verfahren bzw. bei der erfindungsgemäßen Vorrichtung wird nämlich das Ab- und/oder Bestrahlen des Schaumstoffes unter Verwendung eines gekühlten Strahlmittels durchgeführt. Die Verwendung eines gekühlten Strahlmittels eröffnet die Möglichkeit, daß das freiwerdende Treibmittel, wenn das gekühlte Strahlmittel eine Temperatur unterhalb des Siedepunktes des Treibmittels aufweist, sofort flüssig wird bzw. flüssig bleibt. Das beim Stand der Technik aufwendige energieintensive Abkühlen in Kondensatoreinrichtungen zur Verflüssigung des gasförmigen Treibmittels ist erfindungsgemäß nicht mehr notwendig.

Darüber hinaus kann das flüssige Treibmittel leicht von dem ansonsten verwandten Fluidstrom getrennt werden.

Bevorzugt wird als Fluidstrom zum Ab- und Bestrahlen des Schaumstoffes gekühltes Wasser verwandt, das mittels eines Hochdruckstrahlers auf die aufzuschließenden Schaumstoffpartikel gestrahlt wird. Da bei der Entsorgung neben den Treibmitteln ohnehin produktionsbedingt noch Wasser anfällt und austritt, treten hier auch keine zusätzlichen Bearbeitungsprobleme auf.

Da sich vor allem das spezifische Gewicht des Treibmittels von dem spezifischen Gewicht des Wassers unterscheidet, kann in einer nachfolgenden Stufe eine leichte Trennung beider vorgenommen werden. Denn das leichtere Medium schwimmt auf dem anderen.

Da darüber hinaus das vom Treibmittel befreite Polyurethan eine größere Dichte als Wasser aufweist, kann sich dieses am Boden eines Beckens absetzen, von wo aus es ebenfalls problemlos entfernt werden kann.

Erfindungsgemäß wird also bevorzugt gekühltes flüssiges Strahlmittel verwandt, insbesondere Wasser, welches auch feste Partikel enthalten kann. Erfindungsgemäß ist es aber genauso möglich, das Strahlverfahren nicht nur unter Verwendung eines flüssigen Fluidstromes, sondern auch unter Verwendung eines gasförmigen Fluids, also unter Verwendung von Druckluft und/oder Dampf etc. anzuwenden, wobei auch hier, wie bei Verwendung von Flüssigkeiten als Strahlmittel zusätzlich kleine Teilchen aus Metall, Kunststoff oder Stein beigegeben werden können. Das bekannteste Verfahren stellt dabei das Sandstrahlen dar.

Um möglichst alles im Schaumstoff enthaltenes Treibmittel freizusetzen, kann dem in einer Bearbeitungskammer durchgeführten Hochdruckbestrahlen grundsätzlich noch eine Verdichterstufe nachgeordnet sein, um noch enthaltene Restanteile an Treibmitteln durch ein zusätzliches Verdichten der noch vorhandenen Schaumstoffpartikel austreten zu lassen.

Erfindungsgemäß ist weiterhin vorgesehen, daß in der Bearbeitungskammer kein Shreddern der zu entsorgenden Geräte durchgeführt wird. Vielmehr wird erfindungsgemäß vorgeschlagen, beispielsweise bei der Entsorgung von Kühlgeräten vor dem Einbringen in der Kammer die Kunststoff-Innenverkleidung der Kühlgeräte zu entfernen, was problemlos möglich ist, um dann die von der Innenverkleidung befreiten Geräte mit der innen offen zu Tage liegenden Schaumisolierung in die Bearbeitungskammer zum Hochdruck-Bestrahlen zu geben. Die Innenverkleidung ist grundsätzlich mit der Schaumstoffisolierung nicht fest verbunden, so daß sich die Innenverkleidung problemlos entfernen läßt. Das Schaumstoff-Isoliermaterial ist lediglich mit der metallischen Außenwand der Kühlgeräte fest haftend verbunden.

Dieses vorbereitende Gerät hat zudem den Vorteil, daß auch gegebenenfalls andere Einzelkomponenten, wie Elektronikbauteile etc., vorab entfernt und materialabhängig getrennt entsorgt werden können.

Bei älteren Modellen hat es sich als günstig erwiesen, beispielsweise nach dem Entfernen der Wärmetauscher-Schlangen eine rückwärtige Wandverkleidung, die leicht abnehmbar ist, zu entfernen. Von da aus kann dann das innenliegende Schaumstoffmaterial ab- und ausgestrahlt werden.

Weitere Vorteile, Einzelheiten und Merkmale der Erfindung ergeben sich nachfolgend aus den anhand von Zeichnungen dargestellten Ausführungsbeispielen. Dabei zeigen im einzelnen:
- Figur 1 :: in schematischer Darstellung ein Funktionsaufbau einer Anlage zur Entsorgung von treibmittelhaltigen Kunststoff-Schaumteilen, insbesondere Polyurethan, bei welchem ein wässriges Fluid mit gegenüber dem Treibmittel niedrigerem spezifischen Gewicht verwandt wird,
- Figur 2 :: ein zur Figur 1 abgewandeltes Ausführungsbeispiel, bei welchem ein Fluid verwandt wird, welches gegenüber dem Treibmittel ein höheres spezifisches Gewicht aufweist.

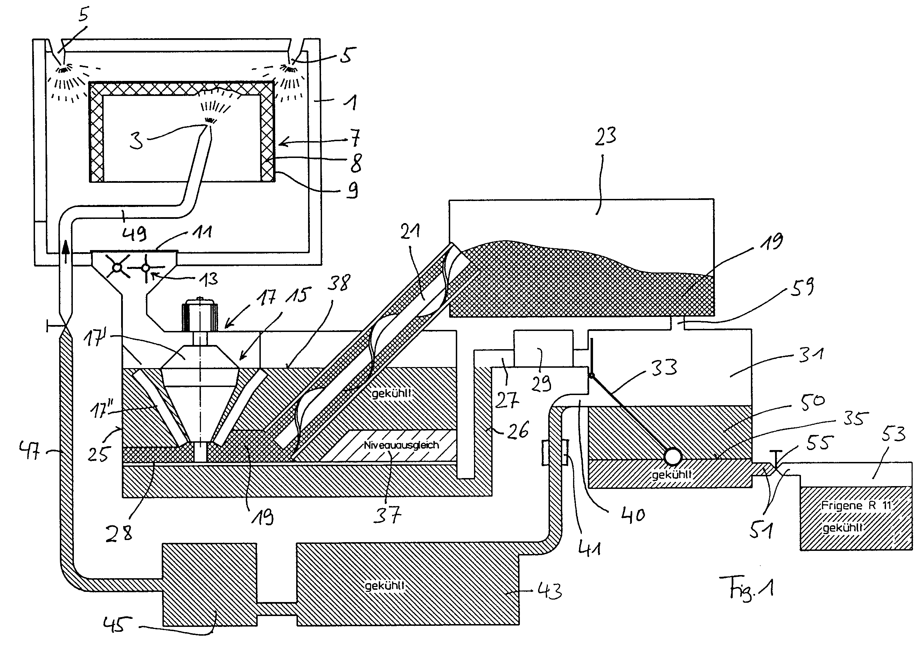

Die in Figur 1 dargestellte Anlage umfaßt eine Kammer 1, die mit einer geeigneten Eintritts- und Austrittsschleuse oder -Tür versehen ist.

In die Kammer 1 hinein führt zumindest eine Hochdruckdüse 3. Im gezeigten Ausführungsbeispiel sind auch noch weitere Feinstrahldüsen 5 durch die Kammerwände in das Innere der Kammer 1 hineingeführt.

In der Praxis wird ein entsprechendes zu entsorgendes Kühlgerät bevorzugt von seiner Innenverkleidung befreit, anschließend in die Kammer 1 eingeführt und die Kammer 1 verschlossen. Beispielsweise mit über 120 bar, vorzugsweise sogar 150, 160, 170, 180 oder sogar 190 bar wird dann mit einem gekühlten Fluid das offenliegende Schaummaterial ab- und bestrahlt. Die eine oder die mehreren Hochdruckdüsen 3 können beispielsweise in unterschiedlicher Lage ausgerichtet oder rotierend oder beispielsweise von einer Bedienungsperson manuell von außen her über Manipulatoren oder in der Kammerwand eingebrachten dichtenden Gummihandschuhen entsprechend ausgerichtet und betätigt werden. Abweichend davon erweist es sich bei einigen Altgeräten auch als günstig, beispielsweise die Gehäuserückwand zu entfernen und von daher das offenliegende Schaummaterial dann ab- und bestrahlen zu können. Auch Injektionsdüsen-Lanzen können hierbei geeignet sein.

Als Fluid können flüssige, gasförmige oder dampfförmige Medien auch unter Beifügung von festen Bestandteilen wie Metall, Kunststoff oder Stein (Sand) verwandt werden.

Allerdings ist der Fluidstrom gekühlt, d.h. er weist eine Temperatur auf, die nicht höher als die Siedetemperatur des Treibmittels, in der Regel eben FCKW Frigen R11 von ungefähr 23,8° aufweist.

Ein erheblicher Teil des Treibmittels wird bei diesem Verfahrensschritt aus dem Kunststoffschaum 8, in der Regel dem Polyurethan (PUR)-Schaum freigesetzt. Der an der Gehäusewand 9 des Gerätes 7 anhaftende PUR-Schaumrest wird durch den hohen Aufpralldruck des Strahlmittels in seiner Schaumstruktur zerstört und die Zellwände zerschlagen. Das am Gehäuse 9 gebundene Treibmittel FCKW Frigen R11 wird ebenfalls frei.

Dem freiwerdenden Treibmittel wird durch das gekühlte Strahlmittel sofort Energie entzogen, so daß das Treibmittel flüssig wird oder bleibt.

Die Feinstrahldüsen 5 erzeugen im Strahlraum einen feinen Fluidnebel, durch welche FCKW-Spuren, sollte beim Abstrahlen nicht das ganze FCKW oder die anderen verwandten Treibmittel vom Strahlmittel erfaßt und gekühlt werden, aus dem Strahlraum ausgewaschen werden.

Das im Kunststoffschaum gebundene Wasser, die PUR-Schaumflocken sowie das schon entstandene PUR-Mehl selbst und das Treibmittel gelangen dann über einen Auslaß 11 mit Hilfe von ineinander greifenden zahnradgetriebeähnlichen Transportwalzen 13 in einen Verdichterraum 15.

Der Verdichter 17 besteht im Ausführungsbeispiel aus einer Quetschmühle, die in Durchflußrichtung konisch verjüngt ist, wobei der rotierende Quetschmühlen- oder Verdichtungskörper 17' mit einer ihn umgebenden Mühlenwand 17'' unter Ausbildung eines nach unten hin sich stets verjüngenden Durchlaßspaltes so zusammenarbeitet, daß die noch vorhandenen, noch nicht völlig zerstörten PUR-Schaumflocken oder -Partikel vollständig gequetscht werden, um die poröse Zellstruktur - wo sie noch vorhanden ist - endgültig zu zerstören. Im gezeigten Ausführungsbeispiel ist der Verdichter 17 in dem Strahlmittel, d.h. dem Fluid, getaucht angeordnet, so daß auch in dieser Behandlungsstufe das noch freiwerdende Treibmittel sofort gekühlt wird und in flüssiger Form vorliegt.

Da das flüssige Treibmittel ein spezifisches Gewicht von in der Regel um 1/0,68 aufweist und damit deutlich schwerer als Wasser ist, sinkt das in der Regel aus flüssigem Frigen bestehende Treibmittel nach unten; auf dem Treibmittel schwimmt das Strahlmittel, d.h. in dem gezeigten Ausführungsbeispiel das wässrige Fluid. Da das vom Treibmittel befreite Polyurethan 19 ein spezifisches Gewicht >1 aufweist, sinkt es im wässrigen Fluid nach unten.

Da im vorliegenden Beispiel der vom Treibmittel befreite PUR-Schaum beispielsweise ein spezifisches Gewicht um ca. 1,2 aufweist und damit schwerer als das wässrige Fluid, aber leichter als das Treibmittel ist, würde sich, sofern sich eine zumindest teilweise Trennung und Absetzung zwischen Fluid und Treibmittel ergibt, eine schwimmende Zwischenschicht mit dem Polyurethan-Schaum ergeben. Im gezeigten Ausführungsbeispiel nach Figur 1 ist aber hier noch ein weiterer, in einem gewissen Abstand über dem Beckenboden des Beckens 25 in etwa horizontal verlaufender Filter 28 vorgesehen, der beispielsweise auch aus einem für die Flüssigkeiten durchlässigen Gitter oder Netz bestehen kann, auf welchem sich aber die Polyurethan-Schaumstoffpartikel absetzen.

Über eine Schnecke 21 wird das auf dem Filter 28 aufliegende Polyurethan aufgenommen und in der Schnecke 21 unter Abgabe von Wasser verdichtet und so in einen obenliegenden Auffangbehälter 23 gefördert.

Das den Verdichter 17 aufnehmende Becken 25 ist über einen Überlauf 27 unter Zwischenschaltung eines Filters 29 mit einem Beruhigungsbehälter 31 verbunden. Im gezeigten Ausführungsbeispiel erfolgt dabei die Verbindung vom Becken 25 zum Überlauf 27 über eine nach Art eines kommunizierenden Gefäßes. Der Anschluß der Steigleitung 26 am Becken 25 erfolgt im Bereich des Beckenbodens, d.h. im gezeigten Ausführungsbeispiel über einen vom unteren Boden bis in eine gewisse Teilhöhe reichenden Ablaufquerschnitt. Der Einlaß zum Beruhigungsbehälter ist über einen Verschluß 33 bevorzugt in Form eines Schwimmerventils regelbar verschlossen. Dadurch wird die maximale Flüssigkeitshöhe der Trennzone, d.h. die Niveauhöhe 35 im Beruhigungsbehälter 31 festgelegt, die nicht überschritten werden kann. Da der Auslauf 40 im Beruhigungsbehälter 31 oberhalb der Niveauhöhe oder Trennzone 35 liegt ist darüber gewährleistet, daß das sich im Beruhigungsbehälter 31 unten absetzende Medium, d.h. das Treibmittel nicht bis zum Auslauf 40 ansteigen kann. Die maximale Füllstandshöhe im Beruhigungsbecken 31 wird durch die Höhe des Auslaufs 40 festgelegt, wobei der Auslauf 40 unterhalb des die Verbindung zum Becken 25 herstellenden Überlaufs 27 liegt.

Um verfahrenstechnisch eine Puffermöglichkeit zu ermöglichen, ist das Becken 25 mit einem Niveauausgleich 37 versehen, worduch durch dessen Volumenvergrößerung bzw.-verminderung die jeweilige Niveauhöhe 38 so eingestellt werden kann, daß zum einen der Verdichter 17 stets voll gewässert ist und zum anderen der Ablauf zum Beruhigungsbehälter 31 gesteuert und beeinflußt werden kann.

Der gegenüber dem Boden des Beruhigungsbeckens 31 höher liegende Auslauf 40 ist beispielsweise über einen gegebenenfalls vorgesehenen Feinfilter 41 mit einem Zwischen- oder Ausgleichsbehälter 43 und dieser wiederum mit einer Hochdruckpumpe 45 verbunden, deren Hochdruckleitung 47 über ein Leitungssystem 49 mit den erwähnten Hochdruckdüsen 3 bzw. Feinstrahldüsen 5 in Verbindung steht. Die erwähnten Becken 25, der Beruhigungsbehälter 31 wie auch zumindest ein Zwischen- oder Ausgleichsbehälter 43 werden jeweils gekühlt, und zwar auf einer Temperatur unterhalb der Siedetemperatur des Treibmittels, wodurch auch das Fluid 50 auf dieser Temperatur gekühlt gehalten wird.

Wie in der Zeichnung dargestellt ist, setzt sich in dem Beruhigungsbehälter 31 zunehmend stärker unten das Treibmittel ab, welches über eine separate bevorzugt in Bodennähe von dem Beruhigungsbecken 31 ausgehende Auflaufleitung 51 einem Treibmittel-Sammelbehälter 53 über ein gegebenenfalls vorgesehenes Rückschlag- oder Verschlußventil 55 zugeführt wird. Natürlich ist auch dieser Treibmittel-Sammelbehälter 53 gekühlt, vorzugsweise wassergekühlt, und zwar ebenfalls auf einer Temperatur unterhalb der Siedetemperatur des Treibmittels.

Schließlich ist noch eine Ablauf- oder Abtropfverbindung 59 zwischen dem Auffangbehälter für das darin gesammelte, vom Treibmittel befreite Polyurethan 19 und dem darunter befindlichen Beruhigungsbehälter 31 vorgesehen. Gegebenenfalls am Polyurethan noch anhaftendes wässriges Fluid kann gegebenenfalls über ein das Polyurethan-Material zurückhaltendes Sieb nach unten hin abtropfen.

Das vorliegende Verfahren ist für den Fall erläutert worden, daß das zu entsorgende Gerät ohne vorhergehendes Shreddern zumindest nach vorhergehender Entnahme zumindest einer Abdeckwand im geschilderten Umfang behandelt und entsorgt wird. Natürlich ist grundsätzlich das vorstehend erläuterte Verfahren auch dann anwendbar, wenn in der Kammer 1 ein Gerät zunächst, wie an sich bekannt ist, geshreddert wird und die dadurch erzeugten Bruchstücke dann der entsprechenden Fluidbestrahlung ausgesetzt werden.

Der gesamte Verfahrensablauf ist durch Verwendung des gekühlten Hochdruck-Fluidstromes höchst energiesparend, da eine Kondensation unter Temperatursenkung von zunächst temperaturerhöhtem gasförmigen Fluidmedium auf eine Temperatur unterhalb des Siedepunktes des Treibmittels nicht notwendig ist.

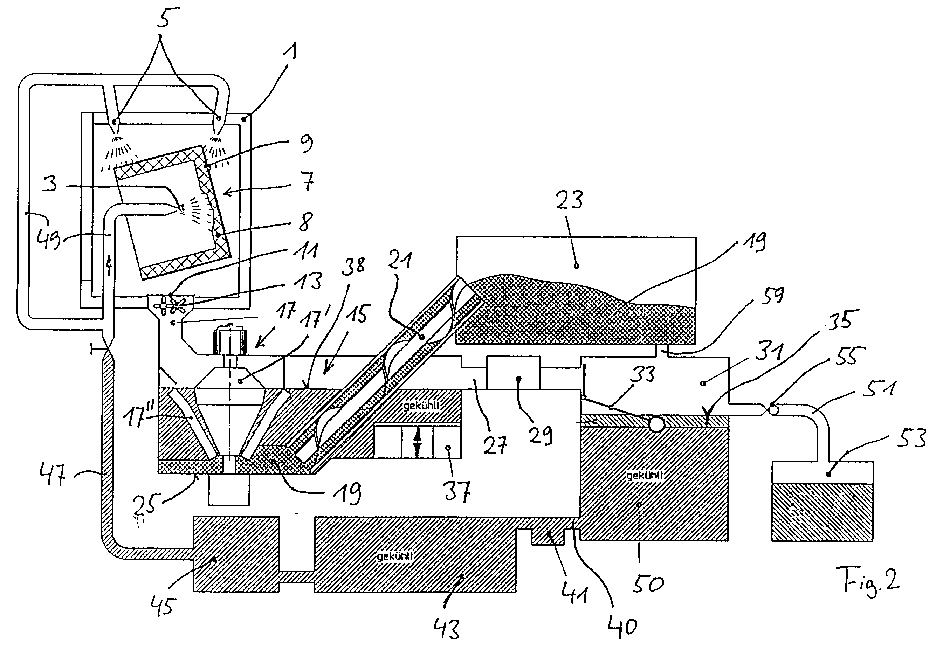

Nachfolgend wird auf das Ausführungsbeispiel nach Figur 2 Bezug genommen, welches praktisch völlig dem Ausführungsbeispiel nach Figur 1 entspricht. Lediglich unterschiedlich ist der Anschluß des Ablaufs 51 zum Treibmittel-Sammelbehälter 53 bzw. der Auslauf 40 über das Rücklauf-Leitungssystem zur Rückführung des Fluids in die Kammer 1.

Denn bei dem Ausführungsbeispiel nach Figur 2 wird davon ausgegangen, daß das verwandte Fluid ein größeres spezifisches Gewicht als das Treibmittel aufweist. Von daher setzt sich in der Beruhigungskammer bzw. dem Beruhigungsbehälter 31 das dann schwerere Fluid unten ab, wobei das demgegenüber leichtere Treibmittel oben schwimmt. Über den Schwimmer des Verschlusses 33 wird der Zulauf geschlossen, wenn eine maximal gewünschte Flüssigkeitsmenge sich im Beruhigungsbecken 31 befindet. Der obere Flüssigkeitsspiegel hängt von der Höhe des Anschlusses des Ablaufs 51 ab, über den das dann oben schwimmende leichtere Treibmittel zu dem wassergekühlten Treibmittel-Sammelbehälter 53 abfließen kann.

Der Verschluß 33 und der ihm zugeordnete Schwimmer sind so angeordnet, daß der Trennspiegel, d.h. das Trenniveau 35 zwischen dem leichteren Treibmittel und dem schwereren sich unten absetzenden Fluid stets in ausreichendem Abstand oberhalb des Ablaufs 40 und unterhalb des anderen Ablaufs liegt. In der höchsten Stellung des Schwimmers ist dann der Verschluß 33 geschlossen. Dadurch ist gewährleistet, daß stets nur sich oben absetzendes Treibmittel in den Treibmittel-Sammelbehälter 53 abfließen kann. Bevorzugt in Nähe des Bodens des Beruhigungsbehälters 31 ist dann der Auslauf 40 für das Rücklauf-System zur Rückführung des Fluids angeschlossen.

## Patentansprüche

1. Verfahren zur Entsorgung von als Isoliermaterial bei Geräten verwendeten, Treibmittel enthaltenden Schaumstoffen wie Polyurethan (PUR), mit den folgenden Schritten:
- Einbringung des Gerätes mit dem Schaumstoff in eine Kammer (1),
- Ab- und/oder Bestrahlen des Kunststoffschaumes mittels eines Fluidstromes unter Ablösung des Kunststoffschaumes und Zerschießen der geschlossenen Schaumstoffzellen und Zertrümmerung der Zellwände des Kunststoffschaumes zu Schaumstoff-Flocken und/oder -Mehl,
- Aussondern der Schaumstoffflocken sowie des Schaumstoffmehles aus dem Treib- und Fluidmittelstrom,
**dadurch gekennzeichnet**,
daß das Ab- und/oder Bestrahlen mittels eines gekühlten Fluidstromes, dessen Temperatur unterhalb des Siedepunktes des Treibmittels liegt, derart erfolgt, daß das freiwerdende Treibmittel flüssig wird bzw. flüssig bleibt.

2. Verfahren nach Anspruch 1, bei dem das Ab- und/oder Bestrahlen des Kunststoffschaumstoffes gegebenenfalls unter Verwendung kleiner Teilchen insbesondere aus Metall, Kunststoff oder Stein (Sand) durchgeführt wird, **dadurch gekennzeichnet**, daß das Ab- und/oder Bestrahlen unter Verwendung von Flüssigkeit oder Dampf bzw. zusätzlich von Gas, insbesondere Druckluft erfolgt.

3. Verfahren nach Anspruch 1 oder 2, **dadurch gekennzeichnet**, daß als Fluidstrom gekühltes Wasser verwendet wird.

4. Verfahren nach einem der Ansprüche 1 bis 3, mit einem dem Ab- und/oder Bestrahlschritt nachgeordneten Verdichtungsschritt, **dadurch gekennzeichnet**, daß die weitere nachfolgende Verdichtung der noch nicht zerstörten Schaumstoffflocken mit Hilfe einer Quetschmühle (17) erfolgt.

5. Verfahren nach Anspruch 4, **dadurch gekennzeichnet**, daß die Verdichtung innerhalb des gekühlten Fluidmediums erfolgt.

6. Verfahren nach einem der Ansprüche 1 bis 5, **dadurch gekennzeichnet**, daß das Fluid, das Treibmittel und das vom Treibmittel befreite Kunststoff-Schaummaterial zumindest einem Absetzbecken (25, 31) zugeführt werden, in welcher sich das Fluid, das Treibmittel und das Schaumstoffmaterial jeweils in Abhängigkeit der Größe deren spezifischen Gewichtes absetzen oder ablagern.

7. Verfahren nach Anspruch 6, **dadurch gekennzeichnet**, daß das sich unten absetzende vom Treibmittel befreite Kunststoffschaum-Material unter Durchführung einer weiteren Verdichtung mittels einer Förderschnecke aus dem Absetzbecken abtransportiert wird.

8. Verfahren nach Anspruch 7, **dadurch gekennzeichnet**, daß das Fluid-Medium in ein nachfolgendes Beruhigungsbecken (31) zur Trennung des Fluid-Mediums vom Treibmittel gefördert wird.

9. Verfahren nach Anspruch 7 oder 8, **dadurch gekennzeichnet**, daß während des Überlaufes vom ersten Absetz- zum nachfolgenden Beruhigungsbecken (25, 31) das überströmende Fluid-Medium und Treibmittel gefiltert werden.

10. Verfahren nach Anspruch 8 oder 9, **dadurch gekennzeichnet**, daß sich das im Beruhigungsbecken (31) unten absetzende Treibmittel über einen separaten Ablauf (51) einem Treibmittel-Sammelbehälter (53) zugeführt wird.

11. Verfahren nach einem der Ansprüche 1 bis 10, **dadurch gekennzeichnet**, daß der gesamte Kreislauf des Fluidstromes von der Kammer (1) über die nachfolgenden Becken und Zwischenkammern sowie Leitungen auf eine Temperatur unterhalb der Siedetemperatur des Treibmittels gekühlt wird.

12. Verfahren nach einem der Ansprüche 1 bis 10, **dadurch gekennzeichnet**, daß zumindest alle Becken (25, 31) und Zwischen- oder Ausgleichsbehälter (43), durch welche das Fluid-Medium strömt, auf eine Temperatur unterhalb der Siedetemperatur des Treibmittels gekühlt werden.

13. Verfahren nach einem der Ansprüche 1 bis 12, **dadurch gekennzeichnet**, daß bei den zu entsorgenden Geräten lediglich zumindest eine Außen- oder Innenwand oder Teile davon zur Freilegung des darunter befindlichen zu entfernenden Kunststoff-Schaummaterials abmontiert wird bzw. werden, und daß die so vorbereiteten Geräte im ungeshredderten Zustand abge- und bestrahlt werden.

14. Vorrichtung zur Entsorgung von als Isoliermaterial bei Geräten verwendeten, Treibmittel enthaltenden Schaumstoffen wie Polyurethan (PUR), mit einer Kammer (1) zum Ab- und/oder Bestrahlen des Treibmittel enthaltenden Kunststoff-Schaummaterials, und mit einer Abstrahlvorrichtung (3), **dadurch gekennzeichnet**, daß ferner eine Kühleinrichtung vorgesehen ist, worüber der der Abstrahlvorrichtung (3, 5) zugeführte Fluidstrom auf eine Temperatur unterhalb der Siedetemperatur des Treibmittels gekühlt ist.

15. Vorrichtung nach Anspruch 14, wobei der Abstrahlvorrichtung gegebenenfalls zusätzlich kleine Teilchen aus Metall, Kunststoff oder Stein (Sand) zuführbar sind, **dadurch gekennzeichnet**, daß die Abstrahlvorrichtung ein Hochdruckstrahler für Flüssigkeiten oder Dampf bzw. zusätzlich Gas, insbesondere Druckluft ist.

16. Vorrichtung nach Anspruch 14 oder 15, **dadurch gekennzeichnet**, daß die Abstrahlvorrichtung ein Hochdruckstrahler für gekühltes Wasser ist.

17. Vorrichtung nach einem der Ansprüche 14 bis 16, **dadurch gekennzeichnet**, daß ferner ein der Abstrahlvorrichtung nachgeordneter Verdichter (17) vorgesehen ist, und zwar nach Art einer Quetschmühle.

18. Vorrichtung nach Anspruch 17, **dadurch gekennzeichnet**, daß der Verdichter (17) in einem Becken (25) angeordnet ist, welches mit dem gekühlten Fluidmedium beflutet ist.

19. Vorrichtung nach einem der Ansprüche 14 bis 18, **dadurch gekennzeichnet**, daß für das Fluid und das Treibmittel zumindest eine Absetzbecken (25, 31) zum gewichtsspezifischen und damit schichtabhängigen Absetzen und Separieren des Fluids vom Treibmittel vorgesehen ist.

20. Vorrichtung nach Anspruch 19, **dadurch gekennzeichnet**, daß eine Förderschnecke (21) vorgesehen ist, mittels der das sich in dem zumindest einen Absetzbecken (25) im Bodenbereich abgesetzte treibmittelfreie Kunststoffmaterial unter Durchführung einer weiteren Verdichtung abtransportierbar ist.

21. Vorrichtung nach Anspruch 20, **dadurch gekennzeichnet**, daß zumindest ein weiteres Beruhigungsbecken (31) zur Trennung des Fluid-Mediums vom Treibmittel vorgesehen ist.

22. Vorrichtung nach Anspruch 20 oder 21, **dadurch gekennzeichnet**, daß zwischen dem Absetz- und dem nachfolgenden Beruhigungsbecken (25, 31) eine Filteranordnung vorgesehen ist.

23. Vorrichtung nach Anspruch 21 oder 22, **dadurch gekennzeichnet**, daß das Beruhigungsbecken (31) über einen gegenüber dem Beckenboden obenliegenden separaten Ablauf (51) mit einem Treibmittel-Sammelbehälter (53) verbunden ist.

24. Vorrichtung nach zumindest einem der Ansprüche 14 bis 23, **dadurch gekennzeichnet**, daß der gesamte Kreislauf der Vorrichtung und insbesondere des Fluidstromes von der Kammer (1) über die nachfolgenden Becken (25, 31) und Zwischenkammern (43) sowie Leitungen (47, 49) auf eine Temperatur unterhalb der Siedetemperatur des Treibmittels gekühlt sind.

25. Vorrichtung nach zumindest einem der Ansprüche 14 bis 23, **dadurch gekennzeichnet**, daß zumindest alle Becken (25, 31) und die Zwischen- oder Ausgleichsbehälter (43), durch welche das Fluid-Medium strömt, mittels einer Kühleinrichtung auf eine Temperatur unterhalb der Siedetemperatur des Treibmittels gekühlt sind.

26. Vorrichtung nach zumindest einem der Ansprüche 14 bis 25, **dadurch gekennzeichnet**, daß ferner Feinstrahldüsen (5) vorgesehen sind, worüber in der Kammer (1) ein Fluidnebel zum Erfassen, Kühlen und damit Auswaschen von in der Kammer (1) gegebenenfalls ventilierenden Treibmittelpartikel und/oder Treibmittelgas erzeugbar ist.

27. Vorrichtung nach zumindest einem der Ansprüche 21 bis 26, **dadurch gekennzeichnet**, daß vom Beruhigungsbecken (31) ausgehend ein zur Kammer (1) führendes Rückleitungs-System (41, 43, 45, 47, 49) vorgesehen ist, um das vom Treibmittel getrennte Fluid der Abstrahlvorrichtung (3) zuzuführen.

## Claims

1. Process for the disposal of foam materials such as polyurethane (PUR) containing a blowing agent which have been used as insulation material in appliances, comprising the following steps:
- introduction of the appliance containing the foam material into a chamber (1),
- blasting and/or spraying the plastic foam by means of a fluid stream with stripping of the plastic foam and disintegration of the closed foam cells and shattering of the cell walls of the plastic foam to give flakes and/or powder of foam material,
- separation of the flakes of foam material and the powder of foam material from the stream of blowing agent and fluid medium,
characterized in that the blasting and/or spraying by means of a cooled fluid stream whose temperature is below the boiling point of the blowing agent is carried out in such a way that the blowing agent liberated becomes liquid or remains liquid.

2. Process according to Claim 1, in which the blasting and/or spraying of the plastic foam is optionally carried out using small particles, in particular of metal, plastic or stone (sand), characterized in that the blasting and/or spraying is carried out using liquid or vapour or additionally gas, in particular compressed air.

3. Process according to Claim 1 or 2, characterized in that the fluid stream used is cooled water.

4. Process according to any of Claims 1 to 3, having a compaction step downstream of the blasting and/or spraying step, characterized in that the subsequent further compaction of the flakes of foam material which have not yet been destroyed is carried out by means of a crushing mill (17).

5. Process according to Claim 4, characterized in that the compaction is carried out within the cooled fluid medium.

6. Process according to any of Claims 1 to 5, characterized in that the fluid, the blowing agent and the plastic foam freed of the blowing agent are fed to at least one settling tank (25, 31) in which the fluid, the blowing agent and the foam material, each as a function of the magnitude of their specific gravity, settle or deposit.

7. Process according to Claim 6, characterized in that the plastic foam which has been freed of blowing agent and settles at the bottom is transported from the settling tank, and is further compacted, by means of a screw conveyor.

8. Process according to Claim 7, characterized in that the fluid medium is conveyed to a downstream calming tank (31) for separating the fluid medium from the blowing agent.

9. Process according to Claim 7 or 8, characterized in that the fluid medium and blowing agent are filtered while flowing over from the first settling tank to the downstream calming tank (25, 31).

10. Process according to Claim 8 or 9, characterized in that the blowing agent which settles at the bottom in the calming tank (31) is fed via a separate outlet (51) to a blowing agent receiver (53).

11. Process according to any of Claims 1 to 10, characterized in that the entire fluid stream circuit from the chamber (1) via the downstream tanks and intermediate chambers, including lines, is cooled to a temperature below the boiling point of the blowing agent.

12. Process according to any of Claims 1 to 10, characterized in that at least all tanks (25, 31) and intermediate or equilibration containers (43) through which the fluid medium flows are cooled to a temperature below the boiling point of the blowing agent.

13. Process according to any of Claims 1 to 12, characterized in that, in the case of the appliances to be disposed of, only at least one outer or inner wall or parts thereof is or are detached to expose the plastic foam to be removed which is located thereunder, and in that the appliances thus prepared are blasted and sprayed in the unshredded state.

14. Apparatus for the disposal of foam materials such as polyurethane (PUR) containing a blowing agent which have been used as insulation material in appliances, having a chamber (1) for the blasting and/or spraying of the plastic foam containing blowing agent, and having a blasting apparatus (3), characterized in that there is also provided a cooling facility by means of which the fluid stream fed to the blasting apparatus (3, 5) is cooled to a temperature below the boiling point of the blowing agent.

15. Apparatus according to Claim 14, where, optionally, small particles of metal, plastic or stone (sand) can be additionally fed to the blasting apparatus, characterized in that the blasting apparatus is a high-pressure sprayer for liquids or vapour or additionally gas, in particular compressed air.

16. Apparatus according to Claim 14 or 15, characterized in that the blasting apparatus is a high-pressure sprayer for cooled water.

17. Apparatus according to any of Claims 14 to 16, characterized in that a compactor (17) downstream of the blasting apparatus is additionally provided, this compactor being of the crushing mill type.

18. Apparatus according to Claim 17, characterized in that the compactor (17) is arranged in a tank (25) which is flooded with the cooled fluid medium.

19. Apparatus according to any of Claims 14 to 18, characterized in that for the fluid and the blowing agent there is provided at least one settling tank (25, 31) for the weight-specific and therefore layer-dependent settling and separation of the fluid from the blowing agent.

20. Apparatus according to Claim 19, characterized in that a screw conveyor (21) is provided, by means of which conveyor the plastic material which is free of blowing agent and has settled in the bottom region of the settling tank (25), of which there is at least one, can be transported away while being compacted further.

21. Apparatus according to Claim 20, characterized in that at least one further calming tank (31) is provided for separating the fluid medium from the blowing agent.

22. Apparatus according to Claim 20 or 21, characterized in that a filter arrangement is provided between the settling tank and the downstream calming tank (25, 31).

23. Apparatus according to Claim 21 or 22, characterized in that the calming tank (31) is connected to a blowing agent receiver (53) via a separate outlet (51) situated above the bottom of the tank.

24. Apparatus according to at least one of Claims 14 to 23, characterized in that the entire circuit of the apparatus and particularly of the fluid stream from the chamber (1) via the downstream tanks (25, 31) and intermediate chambers (43), including lines (47, 49), is cooled to a temperature below the boiling point of the blowing agent.

25. Apparatus according to at least one of Claims 14 to 23, characterized in that at least all tanks (25, 31) and the intermediate or equilibration containers (43) through which the fluid medium flows are cooled by means of a cooling facility to a temperature below the boiling point of the blowing agent.

26. Apparatus according to at least one of Claims 14 to 25, characterized in that fine spray nozzles (5) are additionally provided, by means of which nozzles a fluid mist can be generated in the chamber (1) for collecting, cooling and thus washing out any blowing agent particles and/or blowing agent gas which may be dispersed in the chamber (1).

27. Apparatus according to at least one of Claims 21 to 26, characterized in that starting from the calming tank (21), there is provided a recirculation system (41, 43, 45, 47, 49) leading to the chamber (1), so as to supply the fluid separated from the blowing agent to the blasting apparatus (3).

## Revendications

1. Procédé pour l'élimination de produits en mousse tels que du polyuréthane (PUR), utilisés comme matériaux isolants dans des appareils et contenant des agents d'expansion, comprenant les étapes suivantes :
- introduction de l'appareil avec la mousse dans une chambre (1),
- grenaillage et/ou projection sur la mousse alvéolaire au moyen d'un courant de fluide en détachant la mousse alvéolaire et en détruisant les cellules de mousse fermées et en brisant les parois cellulaires de la mousse alvéolaire pour former des flocons et/ou une poudre de mousse,
- triage des flocons de mousse ainsi que de la poudre de mousse hors du courant d'agent d'expansion et de fluide,
caractérisé en ce que le grenaillage et/ou la projection s'effectue au moyen d'un courant de fluide refroidi dont la température est inférieure au point d'ébullition de l'agent d'expansion de telle sorte que l'agent d'expansion qui se libère devient ou reste liquide.

2. Procédé selon la revendication 1, dans lequel le grenaillage et/ou la projection sur la mousse alvéolaire est effectué le cas échéant en utilisant de petites particules en particulier en métal, en matière plastique ou en pierre (sable), caractérisé en ce que le grenaillage et/ou la projection s'effectue en utilisant un liquide ou une vapeur ou en supplément un gaz, en particulier de l'air comprimé.

3. Procédé selon l'une ou l'autre des revendications 1 et 2, caractérisé en ce que l'on utilise en tant que courant de fluide de l'eau refroidie.

4. Procédé selon l'une quelconque des revendications 1 à 3, comprenant une étape de compression prévue en aval de l'étape de grenaillage et/ou de projection, caractérisé en ce que l'autre compression suivante des flocons de mousse qui ne sont pas encore détruits s'effectue au moyen d'un moulin écraseur (17).

5. Procédé selon la revendication 4, caractérisé en ce que la compression s'effectue à l'intérieur du fluide refroidi.

6. Procédé selon l'une quelconque des revendications 1 à 5, caractérisé en ce que le fluide, l'agent d'expansion, et le matériau en mousse alvéolaire libéré de l'agent d'expansion sont amenés à au moins un bassin de déposition (25, 31) dans lequel le fluide, l'agent d'expansion et le matériau en mousse se déposent ou se précipitent respectivement en dépendance de la valeur de leur poids spécifique.

7. Procédé selon la revendication 6, caractérisé en ce que le matériau en mousse alvéolaire qui se dépose en bas et qui est libéré de l'agent d'expansion est transporté hors du bassin de déposition en effectuant une autre compression au moyen d'un transporteur a vis.

8. Procédé selon la revendication 7, caractérisé en ce que le fluide est transporté dans un bassin de repos suivant (31) pour séparer le fluide de l'agent d'expansion.

9. Procédé selon l'une ou l'autre des revendication 7 et 8, caractérisé en ce que le fluide et l'agent d'expansion qui se déversent sont filtrés pendant le passage depuis le premier bassin de déposition jusqu'au bassin de repos suivant (25, 31).

10. Procédé selon l'une ou l'autre des revendications 8 et 9, caractérisé en ce que l'agent d'expansion qui se dépose en bas dans le bassin de repos (31) est amené via une sortie séparée (51) à un récipient de collecte d'agent d'expansion (53).

11. Procédé selon l'une quelconque des revendications 1 à 10, caractérisé en ce que tout le circuit du courant de fluide, depuis la chambre (1) via les bassins et chambres intermédiaires qui suivent, ainsi que les conduites, sont refroidis à une température inférieure à la température d'ébullition de l'agent d'expansion.

12. Procédé selon l'une quelconque des revendications 1 à 10, caractérisé en ce qu'au moins tous les bassins (25, 31) et le récipient intermédiaire ou d'équilibrage (43) à travers lesquels s'écoule le fluide, sont refroidis à une température inférieure à la température d'ébullition de l'agent d'expansion.

13. Procédé selon l'une quelconque des revendications 1 à 12, caractérisé en ce que l'on démonte depuis les appareils à éliminer seulement au moins une paroi extérieure ou intérieure ou des parties de celle-ci pour libérer le matériau en mousse alvéolaire situé au-dessous, et en ce que les appareils ainsi préparés sont soumis à un grenaillage ou une projection à l'état non déchiqueté.

14. Dispositif pour l'élimination de produits en mousse tels que du polyuréthane (PUR) utilisés comme matériaux isolants dans des appareils et contenant des agents d'expansion, comportant une chambre (1) pour grenailler et/ou projeter sur le matériau en mousse alvéolaire contant l'agent d'expansion, et un dispositif de projection (3), caractérisé en ce qu'il est prévu en outre un dispositif de refroidissement via lequel le courant de fluide amené au dispositif de projection (3, 5) est refroidi à une température inférieure à la température d'ébullition de l'agent d'expansion.

15. Dispositif selon la revendication 14, dans lequel on peut amener au dispositif de projection éventuellement en supplément de petites particules en métal, en matière plastique ou en pierre (sable), caractérisé en ce que le dispositif de projection est un projecteur à haute pression pour des liquides ou de la vapeur ou en supplément pour du gaz, en particulier de l'air comprimé.

16. Dispositif selon l'une ou l'autre des revendications 14 et 15, caractérisé en ce que le dispositif de projection est un projecteur à haute pression pour de l'eau refroidie.

17. Dispositif selon l'une quelconque des revendications 14 à 16, caractérisé en ce qu'il est prévu en outre un compresseur (17), en particulier un moulin écraseur, qui est agencé en aval du dispositif de projection.

18. Dispositif selon la revendication 17, caractérisé en ce que le compresseur (17) est agencé dans un bassin (25) qui est traversé par le fluide refroidi.

19. Dispositif selon l'une quelconque des revendications 14 à 18, caractérisé en ce qu'il est prévu pour le fluide et l'agent d'expansion au moins un bassin de déposition (25, 31) pour faire déposer et séparer le fluide par rapport à l'agent d'expansion selon le poids spécifique et ainsi en dépendance de la stratification.

20. Dispositif selon la revendication 19, caractérisé en ce qu'il est prévu un transporteur à vis, au moyen duquel on peut transporter le matériau en mousse alvéolaire exempt d'agent d'expansion et déposé dans le bassin de déposition (25) dans la région de fond, en effectuant une autre compression.

21. Dispositif selon la revendication 20, caractérisé en ce qu'il est prévu au moins un autre bassin de repos (31) pour séparer le fluide de l'agent d'expansion.

22. Dispositif selon l'une ou l'autre des revendications 20 et 21, caractérisé en ce qu'il est prévu un agencement à filtre entre le bassin de déposition et le bassin de repos suivant (25, 31).

23. Dispositif selon l'une ou l'autre des revendications 21 et 22, caractérisé en ce que le bassin de repos (31) est relié via une sortie (51) situé en haut par rapport au fond du bassin à un récipient de collecte d'agent d'expansion (53).

24. Dispositif selon l'une quelconque des revendications 14 à 23, caractérisé en ce que tout le circuit du dispositif et en particulier du courant de fluide depuis la chambre (1) via les bassins suivants (25, 31) et les chambres intermédiaires (43) ainsi que les conduites (47, 49) sont refroidis à une température inférieure à la température d'ébullition de l'agent d'expansion.

25. Dispositif selon l'une quelconque au moins des revendications 14 à 23, caractérisé en ce qu'au moins tous les bassins (25, 31) et les récipients intermédiaires ou d'équilibrage (43) à travers lesquels s'écoule le fluide, sont refroidis au moyen d'un dispositif de refroidissement à une température inférieure à la température d'ébullition de l'agent d'expansion.

26. Dispositif selon l'une quelconque au moins des revendications 14 à 25, caractérisé en ce qu'il est prévu en outre des buses à jet fin (5) via lesquelles on peut produire dans la chambre (1) un brouillard de fluide pour la saisie, le refroidissement et ainsi le lavage des particules d'agent d'expansion et/ou du gaz d'agent d'expansion éventuellement en ventilation.

27. Dispositif selon l'une quelconque au moins des revendications 21 à 26, caractérisé en ce qu'il est prévu, en partant du bassin de repos (31), un système de conduites de retour (41, 43, 45, 47, 49) menant à la chambre (1), pour amener le fluide séparé de l'agent d'expansion au dispositif de projection (3).
